(19) **Europäisches Patentamt**
**European Patent Office**
**Office européen des brevets**

(11) **EP 3 587 488 B1**

(12) **EUROPEAN PATENT SPECIFICATION**

(45) Date of publication and mention
of the grant of the patent:
**28.12.2022 Bulletin 2022/52**

(21) Application number: **18756721.9**

(22) Date of filing: **07.02.2018**

(51) International Patent Classification (IPC):
**C08L 23/20** $^{(2006.01)}$   **B29C 45/14** $^{(2006.01)}$
**C08F 10/14** $^{(2006.01)}$   **B29C 45/16** $^{(2006.01)}$

(52) Cooperative Patent Classification (CPC):
(C-Sets available)
**B29C 45/1657; C08F 10/14; C08L 23/20;**
C08L 2205/025                              (Cont.)

(86) International application number:
**PCT/JP2018/004119**

(87) International publication number:
**WO 2018/155179 (30.08.2018 Gazette 2018/35)**

(54) **MOLDED ARTICLE AND METHOD FOR MANUFACTURING SAME**

FORMARTIKEL UND VERFAHREN ZUR HERSTELLUNG DAVON

ARTICLE MOULÉ ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2017 JP 2017032476**

(43) Date of publication of application:
**01.01.2020 Bulletin 2020/01**

(73) Proprietor: **Mitsui Chemicals, Inc.**
**Minato-ku**
**Tokyo 105-7122 (JP)**

(72) Inventors:
• **NAKAYAMA, Yusuke**
**Chiba 299-0265 (JP)**
• **SASAKI, Toyoaki**
**Chiba 299-0265 (JP)**
• **YOSHIDA, Kenkichi**
**Chiba 299-0265 (JP)**
• **FUJIHARA, Kazutoshi**
**Chiba 299-0265 (JP)**

(74) Representative: **J A Kemp LLP**
**80 Turnmill Street**
**London EC1M 5QU (GB)**

(56) References cited:
**JP-A- H11 124 479     JP-A- S62 207 645**
**JP-A- 2016 014 129     JP-A- 2016 150 953**

• **JOHANNABER-MICHAELI ED - JOHANNABER F
ET AL: "HANDBUCH SPRITZGIESSEN, 6 -
SONDERVERFAHREN DER
SPRITZGIESSTECHNOLOGIE", 1 January 2004
(2004-01-01), HANDBUCH SPRITZGIESSEN,
MUENCHEN : CARL HANSER VERLAG, DE,
PAGE(S) 514 - 523, XP002454810, ISBN:
978-3-446-22966-2 * the whole document ***

(52) Cooperative Patent Classification (CPC): (Cont.)

C-Sets
**C08L 23/20, C08L 23/20**

**Description**

Technical Field

The present invention relates to a molded product formed of a plurality of portions containing 4-methyl-1-pentene polymers in contact with each other and to a method for producing the same.

Background Art

4-Methyl-1-pentene polymers (also referred to as polymethylpentene, PMP or the like) are used in various applications and used as materials for food storage containers and tableware by taking advantage of the features of having excellent coloring resistance due to their remarkably low surface tension, being excellent in transparency and scratch resistance, and having high heat resistance.

However, when a molded product designed such that a plurality of parts formed of 4-methyl-1-pentene polymers are fused together is to be obtained by a method such as what is called two-color molding and insert molding, it has been pointed out that the parts are not adhered to each other with a sufficient strength.

Patent Document 1 discloses a double-molded article obtained by employing a composition containing polymethylpentene in addition to polypropylene. Specifically, Patent Document 1 discloses a double molded resin tableware obtained by forming a resin molded product of a first composition containing polymethylpentene and polypropylene beforehand, and then forming a second composition containing polymethylpentene, polypropylene, and/or an inorganic filler on the outer side of the molded product. Patent Document 1 also discloses that a double molded resin tableware having good adhesion between the inner and outer molded products is obtained by incorporating polypropylene in an amount of within a specific range in the first composition. Patent Document 1 also discloses that by incorporating polypropylene and/or the inorganic filler into the second composition, occurrence of cracking tends to be suppressed and adhesion of dust tends to be suppressed in the double molded resin tableware to be obtained.

However, Patent Document 1 does not disclose that two or more polymethylpentenes having different melting points from each other are contained in combination in either of the compositions.

Citation List

Patent Document

Patent document 1: JP-A 2010-89305

Summary of Invention

Technical Problem

However, the present inventors have thought that there is room for improvement in scratch resistance and stain resistance of the double molding method disclosed in Patent Document 1. The present inventors have confirmed that a molded product obtained from a composition containing one polymethylpentene and polypropylene has a problem of easily getting scratches and has insufficient stain resistance. This is specifically confirmed in Table 2 described later as data on a composition X'1 described in Examples described later.

The present invention has been made in view of the above circumstances and has an object to solve the above problems. That is, an object of the present invention is to provide a molded product that is formed of a plurality of portions containing 4-methyl-1-pentene polymers in contact with each other and has good bonding strength between the portions and good scratch resistance and stain resistance of the molded product. Another object of the present invention is to provide a method for producing the molded product.

Solution to Problem

Specific means for achieving the above object is as follows.

[1] A molded product comprising:

a portion (1) formed of a composition (X) comprising a 4-methyl-1-pentene (co)polymer (A) satisfying requirements (A-a) to (A-e) below and a 4-methyl-1-pentene copolymer (B) satisfying requirements (B-a) to (B-e) below, wherein a content of the (co)polymer (A) is 60 to 95 parts by mass based on a total of 100 parts by mass of the (co)polymer (A) and the copolymer (B); and

a portion (2) comprising the 4-methyl-1-pentene (co)polymer (A) formed in contact with the portion (1):

(A-a) having a content percentage of a constituent unit (P) derived from 4-methyl-1-pentene of 100 to 90 mol%, and a content percentage of a constituent unit (AQ) derived from an α-olefin having 2 to 20 carbon atoms (other than 4-methyl-1-pentene) of 0 to 10 mol%;

(A-b) having an intrinsic viscosity [η] measured in decalin at 135°C of 1.0 to 4.0 dl/g;

(A-c) having a melting point (Tm) measured by DSC of within the range of 200 to 250°C;

(A-d) having a crystallization temperature (Tc) measured by DSC of within the range of 150 to 220°C;

(A-e) having a density of 820 to 850 kg/m$^3$;

(B-a) having a content percentage of the constituent unit (P) derived from 4-methyl-1-pentene of 65 mol% or more and less than 96 mol%, and a content percentage of a constituent unit (BQ) derived from propylene of more than 4 mol% and 35 mol% or less;

(B-b) having an intrinsic viscosity [η] measured in decalin at 135°C of 0.5 to 4.0 dl/g;

(B-c) having a molecular weight distribution (Mw/Mn) represented by a ratio between a weight-average molecular weight (Mw) and a number-average molecular weight (Mn) measured by gel permeation chromatography (GPC) of 1.0 to 3.5;

(B-d) having no observed melting point (Tm) or having a melting point (Tm) of within the range of 100 to 199°C, the melting point (Tm) being measured by DSC; and

(B-e) having a density of 830 to 860 kg/m$^3$.

[2] The molded product of [1], wherein the content of the (co)polymer (A) in the composition (X) is 70 to 90 parts by mass.

[3] A method for producing the molded product of either [1] or [2], comprising:

a step (1) of forming the portion (1) beforehand; and

a step (2) of forming the portion (2) in contact with the portion (1).

[4] The method of [3], wherein the portion (1) and the portion (2) are formed by injection molding.

Advantageous Effects of Invention

The present invention can provide a molded product that is formed of a plurality of portions containing 4-methyl-1-pentene polymers in contact with each other and that has good bonding strength between the portions and good scratch resistance and stain resistance of the molded product.

Brief Description of Drawing

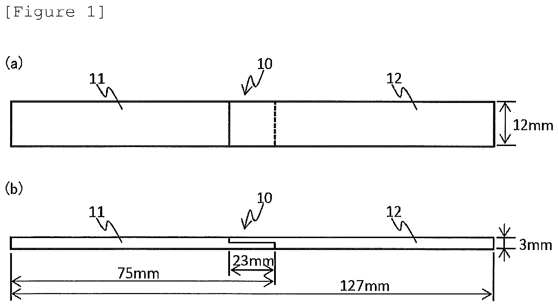

[Figure 1] Figure 1 is a diagram showing the shape and dimensions of an injection-molded product produced in Examples. Figure 1(a) and Figure 1(b) are a plan view and a front view of the injection-molded product, respectively.

Description of Embodiment

A specific embodiment of the present invention will be described below in detail, but the embodiment below does not limit the present invention and appropriate modifications may be made within the scope of the object of the present invention.

A molded product of the present invention includes a portion (1) formed of a composition (X) containing a 4-methyl-1-pentene (co)polymer (A) and a 4-methyl-1-pentene copolymer (B) and a portion (2) that is formed in contact with the portion (1) and contains the 4-methyl-1-pentene (co)polymer (A) described later. Excellent scratch resistance and stain resistance of the molded product of the present invention are provided by the 4-methyl-1-pentene (co)polymer (A) contained in the portion (1) and the portion (2), as confirmed in Examples described later.

In the present specification, the meanings of the terms "(co)polymer" and "polymer" include homopolymer and copolymer.

In the present specification, the expression "x to y" (wherein x and y are numerical values, and x ≠ y) representing a range of numerical values means "x or more and y or less" when x < y, or "x or less and y or more" when x > y, unless otherwise specified.

Components and the like used in each portion of the molded product of the present invention are described as follows.

[Portion (1) Made of Composition (X)]

In the present invention, the portion (1) is formed of the composition (X). In other words, the portion (1) can be regarded as a portion composed of the composition (X).

The composition (X) is a composition containing a 4-methyl-1-pentene (co)polymer (A) (hereinafter also simply referred to as the "polymer (A)") and a 4-methyl-1-pentene copolymer (B) (hereinafter also simply referred to as the "copolymer (B)"). One of the features of the composition (X) is that the composition (X) further contains, in addition to the 4-methyl-1-pentene (co)polymer (A), a particular copolymer having a lower melting point than the 4-methyl-1-pentene (co)polymer (A) as the 4-methyl-1-pentene copolymer (B), as described later. In the composition (X), the content of the 4-methyl-1-pentene (co)polymer (A) is 60 to 95 parts by mass based on a total of 100 parts by mass of the (co)polymer (A) and the 4-methyl-1-pentene copolymer (B). That is, the content of the copolymer (B) is 5 to 40 parts by mass. The content of the 4-methyl-1-pentene (co)polymer (A) is preferably 70 to 90 parts by mass. That is, the content of the 4-methyl-1-pentene copolymer (B) is preferably 10 to 30 parts by mass. If the 4-methyl-1-pentene (co)polymer (A) and the 4-methyl-1-pentene copolymer (B) are contained at the proportions described above, sufficient bonding strength to the portion (2) is achieved.

The 4-methyl-1-pentene (co)polymer (A) (polymer (A)) and the 4-methyl-1-pentene copolymer (B) (copolymer (B)) will be each described below.

<Polymer (A)>

The polymer (A) satisfies the following requirements (A-a) to (A-e).

Requirement (A-a): The content percentage of a constituent unit (P) derived from 4-methyl-1-pentene in the polymer (A) is 90 mol% or more and 100 mol% or less, preferably 95 mol% or more and 100 mol% or less, and the content percentage of a constituent unit (AQ) derived from an α-olefin having 2 to 20 carbon atoms other than 4-methyl-1-pentene is 0 mol% or more and 10 mol% or less, preferably 0 mol% or more and 5 mol% or less. The "mol%" for the polymer (A) is based on setting the total amount of all constituent units, including the constituent unit (P) derived from 4-methyl-1-pentene, the constituent unit (AQ) derived from the α-olefin having 2 to 20 carbon atoms other than 4-methyl-1-pentene, and optional "other constituent units" described later, of the polymer (A) at 100 mol%.

The content percentage of the constituent unit (P) in the polymer (A) being 90 mol% or more is advantageous because a heat-resistance of the molded product is obtained.

Examples of the α-olefin having 2 or more and 20 or less carbon atoms other than 4-methyl-1-pentene, which constitutes the constituent unit (AQ), include ethylene, propylene, 1-butene, 1-hexene, 1-heptene, 1-octene, 1-decene, 1-tetradecene, 1-hexadecene, 1-heptadecene, 1-octadecene, and 1-eicosene. An olefin having 8 or more and 18 or less carbon atoms (such as 1-octene, 1-decene, 1-tetradecene, 1-hexadecene, 1-heptadecene, and 1-octadecene) is preferably used as the α-olefin constituting the constituent unit (AQ) in terms of impartation of an appropriate modulus of elasticity, softness, and flexibility to the layer of the composition (X). In a particularly suitable aspect of the present invention, the α-olefin constituting the constituent unit (AQ) is 1-decene.

The polymer (A) is a polymer containing the constituent unit (P) and the constituent unit (AQ). In a particularly suitable aspect of the present invention, the polymer (A) is a polymer consisting of the constituent unit (P) and the constituent unit (AQ). In the present invention, however, the possibility that the polymer (A) further contains a constituent unit corresponding to neither the constituent unit (P) nor the constituent unit (AQ) is never excluded. The polymer (A) may contain other constituent units (hereinafter also simply referred to as "other constituent units" in the section on the polymer (A) or as "other constituent units (AR)" in order to be distinguished from other constituent units that can be contained in the copolymer (B) described later) other than the constituent unit (P) derived from 4-methyl-1-pentene and the constituent unit (AQ) derived from the α-olefin other than 4-methyl-1-pentene within limits not detrimental to the effects of the present invention. The content percentage of such other constituent units is, for example, 0 to 10 mol%.

Specific examples of a monomer constituting such other constituent units are the same as specific examples of a monomer constituting such other constituent units (that is, "other constituent units (BR)" described later) that can be contained in the copolymer (B) described later.

The value of the content percentage (mol%) of each constituent unit in the polymer (A) is measured by $^{13}$C-NMR measuring method similarly to the case of the copolymer (B) described later.

Requirement (A-b): The intrinsic viscosity [η] of the polymer (A) measured in decalin as the solvent at 135°C is 1.0 to 4.0 dl/g, preferably 1.0 dl/g to 3.5 dl/g, more preferably 1.0 dl/g to 3.0 dl/g. The intrinsic viscosity [η] of the polymer (A) being within the above range is preferable in view of the fluidity during molding and the strength of the molded product.

The intrinsic viscosity [η] of the polymer (A) is a value measured with an Ubbelohde viscometer by the following method.

After 20 mg of the polymer (A) is dissolved in 25 ml of decalin, the specific viscosity $\eta_{sp}$ is measured with an Ubbelohde viscometer in an oil bath at 135°C. The decalin solution is diluted by adding 5 ml of decalin, and the specific viscosity $\eta_{sp}$ is measured in the same manner as the above. The diluting operation is further repeated twice, and the value $\eta_{sp}/C$ when the concentration (C) is extrapolated to 0 is regarded as the intrinsic viscosity $[\eta]$ (unit: dl/g) (see the following equation).

$$[\eta] = \lim(\eta_{sp}/C) \quad (C \rightarrow 0)$$

Requirement (A-c): The melting point (Tm) of the polymer (A) falls within the range of 200 to 250°C, preferably 200°C to 245°C, more preferably 200°C to 240°C. If the melting point (Tm) of the polymer (A) falls within the above range, the modulus of elasticity is more appropriate than in the case where the melting point (Tm) is beyond the above range, and the heat resistance is better than in the case where the melting point (Tm) falls below the above range.

Requirement (A-d): The crystallization temperature (Tc) of the polymer (A) falls within the range of 150 to 220°C, preferably 180°C to 220°C, more preferably 190°C to 220°C. If the crystallization temperature (Tc) of the polymer (A) falls within the above range, the molded product has appropriate flexibility than in the case where the crystallization temperature (Tc) is beyond the above range, and the mold releasability is better than that in the case where the crystallization temperature (Tc) falls below the above range because the rigidity and crystallinity are high.

The melting point (Tm) and the crystallization temperature (Tc) of the polymer (A) are values measured respectively with a differential scanning calorimeter (DSC) by the following method according to JIS K7121.

About 5 mg of the polymer (A) is sealed in an aluminum measurement pan of a differential scanning calorimeter (model DSC 220C) manufactured by Seiko Instruments Inc. at room temperature and heated from the room temperature to 200°C at a rate of 10°C/min. The temperature is kept at 200°C for 5 minutes to completely melt the polymer (A) and then the polymer is cooled to -50°C at a rate of 10°C/min. The temperature at which a peak is observed during the cooling process is regarded as the crystallization temperature (Tc). After the temperature is kept at -50°C for 5 minutes, second heating to 200°C is performed at a rate of 10°C/min, and the temperature at which a peak is observed during the second heating is regarded as the melting point (Tm) of the polymer. When a plurality of peaks are detected, the peak detected on the highest temperature side is selected.

Requirement (A-e): The density of the polymer (A) measured according to JIS K7112 (density gradient tube method) is 820 to 850 kg/m$^3$, preferably 825 to 840 kg/m$^3$, more preferably 830 to 835 kg/m$^3$. If the density falls within the above range, the mechanical strength of the molded product is higher than that in the case where the density falls below the above range, and the impact strength of the molded product tends to be higher than that in the case where the density is beyond the above range.

The polymer (A) preferably satisfies any of the following requirements in addition to the above requirements (A-a) to (A-e).

Requirement (A-f): The melt flow rate (MFR) of the polymer (A) measured according to ASTM D1238 at 260°C under a load of 5.0 kg is not limited to particular values as far as the polymer (A) is easily mixed with the copolymer (B) described later in an extruder and can be molded, but is commonly 0.5 g/10 min to 200 g/10 min, more preferably 1 g/10 min to 150 g/10 min, further preferably 1 g/10 min to 100 g/10 min. If the MFR falls within the above range, the composition (X) is easily injection-molded.

Requirement (A-g): The molecular weight distribution (Mw/Mn) of the polymer (A) is commonly 1.0 to 7.0, preferably 2.0 to 6.0. The molecular weight distribution (Mw/Mn) of the polymer (A) is a value calculated by the method described in Examples.

Requirement (A-h): The polymer (A) is preferably a highly crystalline polymer. The highly crystalline polymer may be either a polymer having an isotactic structure or a polymer having a syndiotactic structure, but a polymer having an isotactic structure is particularly preferable and easily available. The stereoregularity of the polymer (A) is not particularly limited as long as the composition (X) can be molded and sufficient strength for the intended use is obtained.

(Method for Producing Polymer (A))

The polymer (A) may be produced by polymerizing olefins or by thermally decomposing a high-molecular-weight 4-methyl-1-pentene polymer. The polymer (A) may be purified by a method such as solvent fractionation, which is fractionation based on the differences in solubility in the solvent, or molecular distillation, which is separation based on the differences in boiling points.

When the polymer (A) is produced by a polymerization reaction, the melting point, stereoregularity, molecular weight, and the like are controlled by adjusting, for example, the amounts to be charged of 4-methyl-1-pentene and, as needed, the $\alpha$-olefin to be copolymerized, the type of the polymerization catalyst, the temperature during polymerization, and the amount of added hydrogen during polymerization. The method for producing the polymer (A) by a polymerization reaction may be a known method. The polymer (A) can be produced by a method employing a known catalyst such as Ziegler-Natta catalysts and metallocene catalysts, preferably a Ziegler-Natta catalyst. On the other hand, when the polymer (A) is produced by thermally decomposing a higher-molecular-weight 4-methyl-1-pentene polymer, the molecular weight is adjusted to a desired value by controlling the temperature and time of the thermal decomposition.

The polymer (A) may be a commercially available polymer such as TPX manufactured by Mitsui Chemicals, Inc., besides the polymer produced as described above.

<Copolymer (B)>

The copolymer (B) satisfies the following requirements (B-a) to (B-e).

Requirement (B-a): The copolymer (B) contains the constituent unit (P) derived from 4-methyl-1-pentene in a proportion of 65 mol% or more and less than 96 mol% of and a constituent unit (BQ) derived from propylene in a proportion of more than 4 mol% and 35 mol% or less. The "mol%" for the copolymer (B) is based on setting the total of all constituent units, including the constituent unit (P) derived from 4-methyl-1-pentene, the constituent unit (BQ) derived from the α-olefin having 2 or more and 20 less carbon atoms other than 4-methyl-1-pentene, and optional "other constituent units" described later, of the copolymer (B) at 100 mol%.

The content percentage of the constituent unit (P) is 65 mol% or more and less than 96 mol%, preferably 68 mol% or more and less than 92 mol%, more preferably 68 mol% or more and less than 90 mol%, particularly preferably 80 mol% or more and less than 88 mol%.

The content percentage of the constituent unit (BQ) is more than 4 mol% and 35 mol% or less, preferably more than 8 mol% and 32 mol% or less, more preferably more than 10 mol% and 32 mol% or less, particularly preferably more than 12 mol% and 20 mol% or less.

The constituent unit (BQ) is propylene, the use of which results in further reduction in anisotropy of the elongation at break and anisotropy of the tear strength.

The use of propylene means that the impact resistance of the resulting molded product is also enhanced.

When the polymer (A) contains the constituent unit (AQ), the constituent unit (BQ) may be the same as or different from the constituent unit (AQ).

The copolymer (B) may contain other constituent units (also simply referred to as "other constituent units" in the section on the copolymer (B) or as "other constituent units (BR)" in order to be distinguished from other constituent units that can be contained in the polymer (A)) other than the constituent unit (P) derived from 4-methyl-1-pentene and the constituent unit (BQ) derived from propylene within limits not detrimental to the effects of the present invention. The content percentage of such other constituent units is, for example, 0 to 10 mol%.

Examples of a monomer constituting such other constituent units (that is, the "other constituent units (BR)") include cyclic olefins, aromatic vinyl compounds, conjugated dienes, non-conjugated polyenes, functional vinyl compounds, hydroxy group-containing olefins, and halogenated olefins.

Examples of the cyclic olefins, aromatic vinyl compounds, conjugated dienes, non-conjugated polyenes, functional vinyl compounds, hydroxy group-containing olefins, and halogenated olefins include compounds disclosed in paragraphs 0034 to 0041 of JP-A 2013-169685.

Vinylcyclohexane and styrene are particularly preferable as the monomer constituting such other constituent units.

When the copolymer (B) contains such other constituent units, one or two or more other constituent units may be contained.

Specific examples of the monomer constituting the "other constituent units (AR)" that can constitute the polymer (A) are the same as the above specific examples of the monomer constituting the "other constituent units (BR)".

The content percentage (mol%) of each constituent unit in the copolymer (B) is measured by $^{13}$C-NMR measuring method under the following conditions.

-Conditions-

Measuring device: Nuclear magnetic resonance apparatus (model ECP500, manufactured by JEOL Ltd.)
Nucleus to be observed: $^{13}$C (125 MHz)
Sequence: Single pulse proton decoupling
Pulse width: 4.7 μs (45° pulse)
Repetition time: 5.5 seconds
Number of scans: 10,000 or more
Solvent: Mixed solvent of orthodichlorobenzene/deuterated benzene (volume ratio: 80/20)

Concentration of sample: 55 mg/0.6 mL
Measurement temperature: 120°C
Reference value of chemical shift: 27.50 ppm
Requirement (B-b): The intrinsic viscosity [η] of the copolymer (B) measured in decalin as the solvent at 135°C is 0.5 to 4.0 dl/g, preferably 0.5 dl/g to 3.5 dl/g, more preferably 1.0 dl/g to 3.5 dl/g. The intrinsic viscosity [η] of the copolymer (B) being within the above range is preferable in view of the moldability.

The intrinsic viscosity [η] of the copolymer (B) is a value measured in the same manner as for the intrinsic viscosity [η] of the polymer (A).

Requirement (B-c): The molecular weight distribution (Mw/Mn) of the copolymer (B) is 1.0 to 3.5, preferably 1.1 to 3.0, in terms of the stickiness and appearance of the layer made of the composition (X).

The weight-average molecular weight (Mw) of the copolymer (B) is preferably $1 \times 10^4$ to $2 \times 10^6$, more preferably $1 \times 10^4$ to $1 \times 10^6$, in terms of the moldability of the composition (X).

The weight-average molecular weight (Mw) and the molecular weight distribution (Mw/Mn) of the copolymer (B) are values calculated by the method described in Examples.

Requirement (B-d): The melting point (Tm) of the copolymer (B) is not observed or falls within the range of 100°C to 199°C, more preferably not observed or within the range of 110°C to 180°C, further preferably within the range of 110°C to 160°C, particularly preferably within the range of 125°C to 150°C. In the present invention, this requirement means that a particular copolymer having a lower melting point than the polymer (A) or no melting point is used as the copolymer (B).

The melting point (Tm) of the copolymer (B) is a value measured in the same manner as for the melting point (Tm) of the polymer (A).

Requirement (B-e): The density of the copolymer (B) measured according to JIS K7112 (density gradient tube method) is 830 kg/m³ to 860 kg/m³, preferably 830 kg/m³ to 850 kg/m³, in terms of the handleability.

The copolymer (B) preferably satisfies the following requirements in addition to the above requirements (B-a) to (B-e).

Requirement (B-f): The melt flow rate (MFR) of the copolymer (B) measured according to ASTM D1238 at 230°C under a load of 2.16 kg is preferably 0.1 g/10 min to 100 g/10 min, more preferably 0.5 g/10 min to 50 g/10 min, further preferably 0.5 g/10 min to 30 g/10 min, in terms of the fluidity during molding of the composition (X).

(Method for Producing Copolymer (B))

The copolymer (B) can be synthesized using a conventionally known metallocene catalyst system by any of the methods disclosed in, for example, WO 2005/121192, WO 2011/055803, WO 2014/050817 and the like.

<Composition (X)>

In the composition (X), the content of the polymer (A) based on a total of 100 parts by mass of the polymer (A) and the copolymer (B) is 60 parts by mass or more and 95 parts by mass or less, preferably 70 parts by mass or more and 90 parts by mass or less.

If the content ratio between the polymer (A) and the copolymer (B) falls within the above range, a molded product can be obtained which has excellent bonding strength between the portions of the resulting molded product.

The composition (X) is a composition containing the polymer (A) and the copolymer (B), and the possibility that the composition (X) consists of the polymer (A) and the copolymer (B) is not ruled out. In the present invention, the composition (X) may further contain a component (hereinafter referred to as "other components") corresponding to neither the polymer (A) nor the copolymer (B) within limits not detrimental to the object of the present invention. Examples of the "other components" include various additives such as weathering stabilizers, heat stabilizers, antioxidants, UV absorbers, antistatic agents, anti-slip agents, anti-blocking agents, anti-fogging agents, nucleating agents, lubricants, pigments, dyes, anti-aging agents, hydrochloric acid absorbers, inorganic or organic fillers, organic or inorganic blowing agents, crosslinking agents, crosslinking assistants, adhesives, softening agents, and flame retarders; and resins other than the polymer (A) and the copolymer (B).

In one of suitable and typical aspects of the present invention, the composition (X) consists of the polymer (A), the copolymer (B), and any of the various additives above. An example of the composition (X) according to a suitable aspect of the present invention among the above aspects is a composition consisting of the polymer (A), the copolymer (B), and an antioxidant as described in Examples described later.

In another aspect of the present invention, the composition (X) consists of the polymer (A) and the copolymer (B) .

In the present invention, an aspect in which the composition (X) contains resin other than the polymer (A) and the copolymer (B) is never excluded. That is, in still another aspect of the present invention, the composition (X) contains the polymer (A), the copolymer (B), and resin other than the polymer (A) and the copolymer (B). In this case, examples of the "resin other than the polymer (A) and the copolymer (B)" that can be contained in the composition (X) include polypropylene.

The content of the "other components" in the composition (X) is preferably 50 parts by mass or less, more preferably 30 parts by mass or less, further preferably 10 parts by mass or less, based on a total of 100 parts by mass of the polymer (A) and the copolymer (B). In the present invention, the composition (X) may contain the "resin other than the polymer (A) and the copolymer (B)" as the "other components" as described above, but its content is preferably low. The content of the "resin other than the polymer (A) and the copolymer (B)" that may be contained in the composition (X) is 10 parts by mass or less, more preferably 5 parts by mass or less, particularly preferably less than 3 parts by mass, based on a total of 100 parts by mass of the polymer (A) and the copolymer (B).

The composition (X) is obtained by mixing the polymer (A), the copolymer (B), and optionally the "other components" in the above proportions. The mixing method is not limited to particular methods, and examples thereof include a method of compounding with a twin screw extruder and a method of mixing pellets by dry blending or the like.

[Portion (2) Containing (Co)polymer (A)]

The portion (2) contains the polymer (A) described above in the "Portion (1) Formed of Composition (X)" section. The polymer (A) contained in the portion (2) may be the same as or different from the polymer (A) contained in the composition (X) as long as the polymer corresponds to the polymer (A). The portion (2) may consist of the polymer (A) or may further contain other polymers and additives within limits not detrimental to the effects of the invention. Similarly to the portion (1), the portion (2) may be formed of a composition (X') corresponding to the composition (X). In this case, the composition (X') constituting the portion (2) may have the same composition as or different composition from the composition (X) constituting the portion (1). In a suitable aspect of the present invention, the portion (2) is composed of the polymer (A) or a mixture of the polymer (A) and an antioxidant. In another suitable aspect of the present invention, the portion (2) is composed of the composition (X'). In a particularly suitable aspect among them, the composition (X') is a composition (X1') having a different composition from that of the composition (X) constituting the portion (1). In this aspect, the content of the copolymer (B) in the composition (X') is preferably lower than the content of the copolymer (B) in the composition (X) constituting the portion (1). In this case, the copolymer (B) contained in the composition (X') may be the same as or different from the copolymer (B) contained in the composition (X) as long as the copolymer corresponds to the copolymer (B).

[Method for Producing Molded Product]

The molded product according to the present invention can be obtained by forming the portion (1) and the portion (2) such that the portion (2) has contact with the portion (1) .

The method for producing the molded product according to the present invention is not limited, and examples of molding means that can be used for producing the molded product according to the present invention include known molding means such as injection molding and laminate molding. The molded product according to the present invention can be molded by, for example, insert molding, laminate molding, two-color molding, or the like.

The order of formation of the portion (1) and the portion (2) and specific molding methods selected for molding the portion (1) and the portion (2) respectively are not particularly limited. However, it is preferable in view of enhancement of the bonding strength that the portion (1) be formed beforehand and the portion (2) be formed so as to be in contact with the portion (1) in any of the above examples of the molding method. That is, in a suitable aspect of the present invention, the method for producing the molded product according to the present invention includes a step of molding the composition (X) to form the portion (1) and a step of molding the polymer (A) or the composition containing the polymer (A) so as to contact with the portion (1) to form the portion (2). In a suitable and typical aspect of the present invention, the method for producing the molded product of the present invention includes a primary injection step of injection-molding the composition (X) to form the portion (1) and a secondary injection step of injection-molding the polymer (A) or the composition containing the polymer (A) so as to contact with the portion (1) to form the portion (2). In one of suitable aspects of the present invention, the secondary injection step can be performed by inserting the portion (1) that is obtained in the primary injection step beforehand into an injection mold for forming the molded product and then injection-molding the polymer or composition constituting the portion (2) into the injection mold. In the present invention, the secondary injection step may be performed by

performing the primary injection step using an injection mold a part of which can be transformed or replaced, performing, by transforming or replacing the part of the injection mold, a step of providing a cavity that is adjacent to the portion (1) obtained in the primary injection step and that has a shape corresponding to the portion (2), and then further injection-molding the polymer or composition constituting the portion (2) into the cavity.

The molding temperature commonly falls within the range of 200 to 350°C, preferably 220 to 350°C.

[Shape of Molded Product]

The contact surface between the portion (1) and the portion (2) may be flat or curved. The molded product of the present invention may include other portions other than the portion (1) and the portion (2) as far as the effects of the invention are not deteriorated. The shape of the resulting molded product is not limited to particular shapes, and examples thereof include plates and films, containers, tubes, and rods. The portion (1) and the portion (2) are bonded together. The bonding strength is adjusted depending on the applications of the molded product.

[Applications of Molded Product]

Applications of the molded product of the present invention are not particularly limited, and the molded product can be used in applications in which common olefin resins are applied. The molded product is suitably used in applications in which poly(4-methylpentene) resins are conventionally used, more preferably suitably used as tableware, a food storage container, an everyday item, a mold release film, or the like.

Examples

The present invention is more specifically described below referring to Examples, but the present invention is in no way limited to Examples below within the gist of the present invention.

[Methods for Measuring Various Physical Properties]

Methods used for measuring various physical properties of each of polymers obtained in Examples are described as follows.

(1) Composition

The composition of the polymer was determined by $^{13}$C-NMR measuring method described above.

(2) Intrinsic viscosity [η]

The intrinsic viscosity [η] measured in decalin as the solvent at 135°C was determined with an Ubbelohde viscometer by the method described above.

(3) Weight-Average Molecular Weight (Mw) and Molecular Weight Distribution (Mw/Mn)

Measurement was carried out by gel permeation chromatography (GPC) at a flow rate of 1.0 ml/min at 140°C with an ALC/GPC 150-C plus liquid chromatograph (differential refractometer detector integrated) manufactured by Waters Corporation using two GMH6-HT columns and two GMH6-HTL columns manufactured by Tosoh Corporation connected in series and using o-dichlorobenzene as the mobile phase medium. The resulting chromatogram was analyzed by a known method using a calibration curve obtained with a standard polystyrene sample to determine the weight-average molecular weight (Mw) and the molecular weight distribution (Mw/Mn).

(4) Melt Flow Rate (MFR)

The melt flow rate (MFR) measured according to ASTM D1238 at 260°C under a load of 5.0 kg was determined. In the measurement of the MFR of the polymer (B) below (that is, polymers B-1 and B-2 below), the measurement conditions were changed to 230°C and a load of 2.16 kg.

(5) Density

The density was determined according to JIS K7112 (density gradient tube method).

(6) Melting Point (Tm) and Crystallization Temperature (Tc)

The melting Point (Tm) and the crystallization Temperature (Tc) were determined from peak temperatures measured by the above method according to JIS K7121.

[4-Methyl-1-pentene Polymer (A)]

4-Methyl-1-pentene copolymers A-1 and A-2 were obtained by changing the proportions of 4-methyl-1-pentene, 1-decene, and hydrogen according to the polymerization method disclosed in Comparative Example 7 and Comparative Example 9 of WO 2006/054613. That is, both of the 4-methyl-1-pentene copolymers A-1 and A-2 were obtained by using, as a polymerization catalyst, a solid titanium catalyst obtained by the reaction of anhydrous magnesium chloride, 2-ethylhexyl alcohol, 2-isobutyl-2-isopropyl-1,3-dimethoxypropane, and titanium tetrachloride.

Each of the resulting 4-methyl-1-pentene copolymers A-1 and A-2 was dry-blended with 0.15 parts by mass of an Irganox 1010 phenolic stabilizer (manufactured by BASF SE) and 0.30 parts by mass of a DLTP "Yoshitomi" sulfuric stabilizer (manufactured by Mitsubishi Chemical Corporation) as heat stabilizers based on 100 parts by mass of the 4-methyl-1-pentene copolymer, and the resulting mixture was mixed by use of a twin screw extruder manufactured by Thermo Plastics Kogyo KK, to give each of the 4-methyl-1-pentene polymers A-1 and A-2 having physical properties shown in Table 1.

The 4-methyl-1-pentene polymers A-1 and A-2 obtained as described above are strictly compositions because small amounts of the phenolic stabilizer and the sulfuric stabilizer are contained. However, since the amount of these stabilizers added is small, effects of the presence of these stabilizers on the physical properties are estimated to be sufficiently negligible. Hence, the 4-methyl-1-pentene polymers A-1 and A-2 are dealt with as polymers and referred to as the "polymer A-1" and the "polymer A-2", respectively, in the descriptions below.

The results of measurements of various physical properties of the resulting polymers A-1 and A-2 are shown in Table 1.

[4-Methyl-1-pentene Copolymer (B)]

<Synthesis Example 1> -Synthesis of Polymer B-1-

Into a 1.5-L SUS stainless steel autoclave equipped with stirring blades sufficiently purged with nitrogen, 300 ml of n-hexane (dried over activated alumina in a dry nitrogen atmosphere) and 450 ml of 4-methyl-1-pentene were charged at 23°C, 0.75 ml of a 1.0 mmol/ml solution of triisobutylaluminum (TIBAL) in toluene was then charged, and stirring was started.

The autoclave was then heated until the internal temperature reached 60°C, and pressure was applied with propylene such that the total pressure (gage pressure) reached 0.19 MPa.

Subsequently, 0.34 ml of a toluene solution containing 1 mmol of methylaluminoxane in terms of Al and 0.01 mmol of diphenylmethylene(1-ethyl-3-t-butyl-cyclopentadienyl)(2,7-dit-butyl-fluorenyl)zirconium dichloride that had been prepared beforehand was injected into the autoclave with pressure applied by nitrogen, to allow the polymerization reaction to start. During the polymerization reaction, the internal temperature of the autoclave was adjusted to 60°C.

The polymerization reaction was stopped by injection of 5 ml of methanol into the autoclave with pressure applied by nitrogen 60 minutes after the start of the polymerization, and then the pressure in the autoclave was depressurized to the atmospheric pressure. After the depressurization, acetone was added to the resultant reaction solution with stirring of the reaction solution, to give a polymerization reaction product containing the solvent. The resulting polymerization reaction product containing the solvent was then dried under a reduced pressure at 130°C for 12 hours, to give 44.0 g of the polymer B-1 as the copolymer (B) in the form of powder.

The results of measurements of various physical properties of the polymer B-1 are shown in Table 1.

<Synthesis Example 2> -Synthesis of Polymer B-2-

Into a 1.5-L SUS stainless steel autoclave equipped with stirring blades sufficiently purged with nitrogen, 750 ml of 4-methyl-1-pentene was charged at 23°C. Into the autoclave, 0.75 ml of a 1.0 mmol/ml solution of triisobutylaluminum (TIBAL) in toluene was charged, and stirring was started.

The autoclave was then heated until the internal temperature reached 60°C, and pressure was applied with propylene such that the total pressure reached 0.13 MPa (gage pressure). Subsequently, 0.34 ml of a toluene solution containing 1 mmol of methylaluminoxane in terms of Al and 0.01 mmol of diphenylmethylene(1-ethyl-3-t-butylcyclopentadienyl)(2,7-di-t-butyl-fluorenyl) zirconium dichloride that had been prepared beforehand was injected into the autoclave with pressure applied by nitrogen, to allow the polymerization to start. During the polymerization reaction, the internal temperature of the autoclave was adjusted to 60°C. The polymerization was stopped by injection of 5 ml of methanol into the autoclave with pressure applied by nitrogen 60 minutes after the start of the polymerization, and the pressure in the autoclave was reduced to the atmospheric pressure. Acetone was added to the resultant reaction solution with stirring.

The resulting powdery polymer containing the solvent was dried at 100°C under a reduced pressure for 12 hours, to give 36.9 g of the copolymer (B-2). The results of measurements of various physical properties are shown in Table 1.

[Polymer (C-1) Other than Polymer (A) and Copolymer (B)]

Prime Polypro J105G (homopolypropylene, MFR: 9.0 g/10 min (at 230°C under a load of 2.16 kg), hereinafter also referred to as a "polymer C-1"), which was polypropylene manufactured by Prime Polymer Co., Ltd., was used.

[Table 1]

| | | | Polymer A-1 | Polymer A-2 | Polymer B-1 | Polymer B-2 |
|---|---|---|---|---|---|---|
| Composition | Content percentage of constituent unit (P) | mol % | 97.8 | 98.2 | 84.1 | 72.5 |
| | Type of constituent unit (AQ) or (BQ) | | 1-Decene | 1-Decene | Propylene | Propylene |
| | Content percentage of constituent unit (AQ) or (BQ) | mol % | 2.2 | 1.8 | 15.9 | 27.5 |
| Intrinsic viscosity [η] | | dl/g | 1.5 | 1.8 | 1.5 | 1.5 |
| Weight-average molecular weight (Mw) | | | 310000 | 380000 | 340000 | 337000 |
| Molecular weight distribution (Mw/Mn) | | | 3.3 | 3.9 | 2.1 | 2.1 |
| Melt flow rate (MFR) at 260°C under load of 5.0 kg | | g/10 min | 100 | 66 | - | - |
| Melt flow rate (MFR) at 230°C under load of 2.16 kg | | g/10 min | - | - | 11 | 11 |
| Density | | kg/m$^3$ | 833 | 833 | 838 | 839 |
| Melting point (Tm) | | °C | 232 | 233 | 132 | Not observed |
| Crystallization temperature (Tc) | | °C | 212 | 211 | 60 | Not observed |

[Production of Compositions (X) (X1 to X8) and Other Compositions (X'1 and A-3)]

<Preparation of Composition (X)>

90 parts by mass of the polymer A-1 and 10 parts by mass of the polymer B-1 were dry-blended, and a resulting mixture was then mixed by use of a twin screw extruder manufactured by Thermo Plastics Kogyo KK, to give a composition X1.

Similarly, each composition was obtained using the formulation shown in Table 2.

That is, compositions X2, X5, and X6 were each obtained in the same manner as for the composition X1 except that the type and content percentage of the polymer (A) and the type and content percentage of the polymer (B) were changed to those shown in Table 2.

Compositions X3, X4, X7, and X8 were each obtained in the same manner as for the composition X1 except that the type and content percentage of the polymer (A) and the type and content percentage of the polymer (B) were changed respectively to those shown in Table 2 and that lithopone (white pigment made of a mixture of barium sulfate and zinc sulfide) was further added in an amount listed in Table 2.

<Preparation of Other Compositions (X'1 and A-3)>

A composition X'1 was obtained in the same manner as for the composition X1 except that 100 parts by mass of the polymer A-1 and 5.3 parts by mass of the polymer C-1 were used instead of 90 parts by mass of the polymer A-1 and 10 parts by mass of the polymer B-1.

A composition A-3 was obtained in the same manner as for the composition X1 except that 100 parts by mass of the polymer A-1 was used instead of 90 parts by mass of the polymer A-1 and 10 parts by mass of the polymer B-1 and that 43 parts by mass of lithopone was further added.

[Production and Evaluation of Injection-Molded Square Plate]

Injection-molded square plates of the obtained compositions X1 to X8, A-3, and X'1, the polymer A-1, and the polymer C-1 were produced in order to evaluate their scratch resistance, stain resistance, and transparency (haze). Each injection-molded square plate measuring 2 mm in thickness, 120 mm in width, and 130 mm in length was produced using an injection molding machine (M-70B, manufactured by Meiki Co., Ltd.) at a molding temperature of 295°C, a mold temperature of 60°C, a screw speed during measurement of 260 rpm, and a molding cycle of 60 s.

The following evaluations were performed on the resulting injection-molded square plates. The evaluation results are shown together in Table 2.

<Evaluation of Scratch Resistance (Scratch Test)>

A scratch test was carried out on each of the injection-molded square plates obtained. The test was carried out with a reciprocating friction and wear tester manufactured by Shinto Scientific Co., Ltd. using a sapphire scratch jig (0.5 R) under a load of 2 kg at a speed of 500 mm/min and a stroke of 50 mm. The scratch depth was measured using a surface roughness and shape measuring instrument (Surfcom 1400D, manufactured by Tokyo Seimitsu Co., Ltd.). The test was carried out with a probe with a diameter of 5 $\mu$m and a measurement length of 2.0 mm at a measurement speed of 0.3 mm/s, the average of the values obtained from three measurement points was employed, and the evaluation was carried out according to the following criteria.

AA: The scratch depth is 20 $\mu$m or less.
CC: The scratch depth is more than 20 $\mu$m.

<Evaluation of Transparency>

The injection-molded square plate obtained was visually inspected, and the evaluation was carried out according to the following criteria.

AA: The transparency is so high that the side across the sheet can be clearly seen.
BB: The sheet is somewhat cloudy and the side across the sheet can be vaguely seen.
CC: The transparency is so low that the side across the sheet cannot be seen.

<Evaluation of Stain Resistance>

The injection-molded square plate obtained was immersed in a test liquid obtained by mixing commercially available ketchup and edible canola oil at a mass ratio of 90:10, held at 90°C for 20 hours, and washed with water. Visual inspection was subsequently carried out, and the evaluation was carried out according to the following criteria.

AA: No coloring is observed.
BB: Faintly colored.
CC: Strongly colored.

[Production of Molded Product]

An injection-molded product was produced in order to evaluate its adhesion. Figure 1 shows the shape and dimensions of the injection-molded product. In Figure 1, an injection-molded product (10) consists of a portion 1 (11) and a portion 2 (12). As the primary injection, a polymer or a composition constituting the portion 1 was injection-molded into an injection mold for forming the portion 1 using an injection molding machine (M-70B, manufactured by Meiki Co., Ltd.) at a molding temperature of 280°C, a mold temperature of 50°C, a screw speed during measurement of 260 rpm, and a molding cycle of 50s, to give the portion 1 (11). Subsequently, as the secondary injection, the portion 1 obtained in the primary injection was inserted in an injection mold for forming the molded product, and a polymer or a composition constituting the portion 2 is injection-molded into the injection mold (the portion 2 (12) is formed in this process) under the same molding conditions as those used in the formation of the portion 1, to give the injection-molded product (10).

<Examples 1 to 12, Comparative Examples 1 to 5, and Reference Example>

Each molded product was obtained using polymers or compositions listed in Table 3 in the primary injection and the secondary injection.

[Evaluation on Molded Product]

The following measurements and evaluations were performed on the molded product obtained. The measurement and evaluation methods are described below. Table 3 shows the results.

<Evaluation of Adhesion>

Both ends of the molded product obtained were respectively pinched and held between the thumbs and forefingers of the right and left hands, and a twisting force is applied with both hands to evaluate the adhesion between the half pieces. The evaluation was carried out according to the following criteria.

AA: Detachment is not caused even by a strong twist, and the bonding is sufficient.
BB: Detachment along the bonded surface is caused by a strong twist.
CC: The half pieces are not bonded together, and the evaluation cannot be carried out.

[Table 2]

| | | | Polymer or composition used to form injection-molded square plate | | | | | | | | | | | |
|---|---|---|---|---|---|---|---|---|---|---|---|---|---|---|---|
| | | | A-1 | A-3 | C-1 | X1 | X2 | X3 | X4 | X5 | X6 | X7 | X8 | X'1 |
| Composition (part by mass) | Polymer (A) | A-1 | 100 | 0 | 0 | 90 | 80 | 0 | 0 | 90 | 80 | 0 | 0 | 100 |
| | | A-2 | 0 | 100 | 0 | 0 | 0 | 86 | 74 | 0 | 0 | 86 | 74 | 0 |
| | Copolymer (B) | B-1 | 0 | 0 | 0 | 0 | 0 | 0 | 0 | 10 | 20 | 14 | 26 | 0 |
| | | B-2 | 0 | 0 | 0 | 10 | 20 | 14 | 26 | 0 | 0 | 0 | 0 | 0 |
| | Others | C-1 | 0 | 0 | 100 | 0 | 0 | 0 | 0 | 0 | 0 | 0 | 0 | 5.3 |
| | | Lithopone | 0 | 43 | 0 | 0 | 0 | 37 | 32 | 0 | 0 | 37 | 32 | 0 |
| Evaluation | | Scratch resistance evaluation | AA | AA | AA | AA | AA | AA | AA | AA | AA | AA | AA | CC |
| | | Stain resistance evaluation | AA | AA | CC | AA | AA | AA | AA | AA | AA | AA | AA | BB |
| | | Transparency evaluation | AA | CC | CC | AA | AA | CC | CC | AA | AA | CC | CC | BB |

[Table 3]

| | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| Primary injection | X1 | X2 | X1 | X2 | X1 | X2 | X5 | X6 | X5 | X6 | X5 | X6 |
| Secondary injection | A-2 | A-3 | X3 | X3 | X7 | X7 | A-3 | A-3 | X3 | X3 | X7 | X7 |
| Adhesion evaluation | BB | AA | BB | AA | BB | AA | BB | AA | BB | AA | BB | AA |

| | Comparative example 1 | Comparative example 2 | Comparative example 3 | Comparative example 4 | Comparative example 5 | Reference example |
|---|---|---|---|---|---|---|
| Primary injection | A-1 | A-1 | A-1 | A-1 | A-1 | X'1 |
| Secondary injection | A-3 | X3 | X4 | X7 | X8 | X'1 |
| Adhesion evaluation | CC | CC | CC | CC | CC | BB |

[Comparison between Examples and Comparative Examples]

Table 3 shows that, in Examples, molded products were obtained but, in Comparative Examples 1 to 5, half pieces were not bonded together; that is, molded products each including the portion (2) formed in contact with the portion (1) were not obtained. Table 2 shows that the scratch resistance and stain resistance of the compositions X1 to X7 corresponding to the composition X used in the present invention are better than those of the composition X'1 that does not correspond to the composition X. In addition, it is shown that the transparency of the compositions X1, X2, X5, and X6 is also excellent.

Reference Signs List

10    Injection-molded product produced in Example
11    Portion 1
12    Portion 2

**Claims**

**1.**   A molded product comprising:

a portion (1) formed of a composition (X) comprising a 4-methyl-1-pentene (co)polymer (A) satisfying requirements (A-a) to (A-e) below and a 4-methyl-1-pentene copolymer (B) satisfying requirements (B-a) to (B-e) below, wherein a content of the(co)polymer (A) is 60 to 95 parts by mass based on a total of 100 parts by mass of the (co)polymer (A) and the copolymer (B); and
a portion (2) comprising the 4-methyl-1-pentene (co)polymer (A) formed in contact with the portion (1):

(A-a) having a content percentage of a constituent unit (P) derived from 4-methyl-1-pentene of 100 to 90 mol%, and a content percentage of a constituent unit (AQ) derived from an $\alpha$-olefin having 2 to 20 carbon atoms (other than 4-methyl-1-pentene) of 0 to 10 mol%;
(A-b) having an intrinsic viscosity [$\eta$] measured in decalin at 135°C of 1.0 to 4.0 dl/g;
(A-c) having a melting point (Tm) measured by DSC of within the range of 200 to 250°C;
(A-d) having a crystallization temperature (Tc) measured by DSC of within the range of 150 to 220°C;
(A-e) having a density of 820 to 850 kg/m$^3$;
(B-a) having a content percentage of the constituent unit (P) derived from 4-methyl-1-pentene of 65 mol% or more and less than 96 mol%, and a content percentage of a constituent unit (BQ) derived from propylene of more than 4 mol% and 35 mol% or less;
(B-b) having an intrinsic viscosity [$\eta$] measured in decalin at 135°C of 0.5 to 4.0 dl/g;
(B-c) having a molecular weight distribution (Mw/Mn) represented by a ratio between a weight-average molecular weight (Mw) and a number-average molecular weight (Mn) measured by gel permeation chromatography (GPC) of 1.0 to 3.5;
(B-d) having no observed melting point (Tm) or having a melting point (Tm) of within the range of 100 to 199°C, the melting point (Tm) being measured by DSC; and
(B-e) having a density of 830 to 860 kg/m$^3$.

2. The molded product according to claim 1, wherein the content of the (co)polymer (A) in the composition (X) is 70 to 90 parts by mass.

3. A method for producing the molded product according to either claim 1 or claim 2, comprising:

a step (1) of forming the portion (1) beforehand; and
a step (2) of forming the portion (2) in contact with the portion (1).

4. The method according to claim 3, wherein the portion (1) and the portion (2) are formed by injection molding.


**Patentansprüche**

1. Geformtes Produkt, umfassend:

einen Abschnitt (1), der aus einer Zusammensetzung (X) ausgebildet ist, die ein 4-Methyl-1-penten-(Co)polymer (A), das die nachstehenden Anforderungen (A-a) bis (A-e) erfüllt, und ein 4-Methyl-1-penten-Copolymer (B) umfasst, das die nachstehenden Anforderungen (B-a) bis (B-e) erfüllt, wobei ein Gehalt des (Co)polymers (A) 60 bis 95 Masseteile beträgt, bezogen auf insgesamt 100 Masseteile des (Co)polymers (A) und des Copolymers (B); und
einen Abschnitt (2), umfassend das 4-Methyl-1-penten-(Co)polymer (A), das in Kontakt mit dem Abschnitt (1) ausgebildet ist:

(A-a) mit einem prozentualen Anteil einer Komponenteneinheit (P), die von 4-Methyl-1-penten abgeleitet ist, von 100 bis 90 Mol-%, und einem prozentualen Anteil einer Komponenteneinheit (AQ), die von einem α-Olefin mit 2 bis 20 Kohlenstoffatomen abgeleitet ist (anders als 4-Methyl-1-penten), von 0 bis 10 Mol-%;
(A-b) mit einer intrinsischen Viskosität [η], gemessen in Decalin bei 135 °C, von 1,0 bis 4,0 dl/g;
(A-c) mit einem Schmelzpunkt (Tm), gemessen durch DSC, in dem Bereich von 200 bis 250 °C;
(A-d) mit einer Kristallisationstemperatur (Tc), gemessen durch DSC, in dem Bereich von 150 bis 220 °C;
(A-e) mit einer Dichte von 820 bis 850 kg/m$^3$;
(B-a) mit einem prozentualen Anteil der Komponenteneinheit (P), die von 4-Methyl-1-penten abgeleitet wird, von 65 Mol-% oder mehr und weniger als 96 Mol-% und einem prozentualen Anteil einer Komponenteneinheit (BQ), die von Propylen abgeleitet wird, von mehr als 4 Mol-% und 35 Mol-% oder weniger;
(B-b) mit einer intrinsischen Viskosität [η], gemessen in Decalin bei 135 °C, von 0,5 bis 4,0 dl/g;
(B-c) mit einer Molekulargewichtsverteilung (Mw/Mn), dargestellt durch ein Verhältnis zwischen einem gewichtsmittleren Molekulargewicht (Mw) und einem zahlenmittleren Molekulargewicht (Mn), gemessen durch Gelpermeationschromatographie (GPC), von 1,0 bis 3,5;
(B-d) mit keinem beobachteten Schmelzpunkt (Tm) oder mit einem Schmelzpunkt (Tm) in dem Bereich von 100 bis 199 °C, wobei der Schmelzpunkt (Tm) durch DSC gemessen wird; und
(B-e) mit einer Dichte von 830 bis 860 kg/m$^3$.

2. Geformtes Produkt nach Anspruch 1, wobei der Gehalt des (Co)polymers (A) in der Zusammensetzung (X) 70 bis 90 Masseteile beträgt.

3. Verfahren zum Herstellen des geformten Produkts nach Anspruch 1 oder 2, umfassend:

einen Schritt (1) des Ausbildens des Abschnitts (1) im Voraus; und
einen Schritt (2) des Ausbildens des Abschnitts (2) in Berührung mit dem Abschnitt (1).

4. Verfahren nach Anspruch 3, wobei der Abschnitt (1) und der Abschnitt (2) durch Spritzgießen ausgebildet werden.

**Revendications**

1.  Produit moulé comprenant :

    une partie (1) formée d'une composition (X) comprenant un (co)polymère de 4-méthyl-1-pentène (A) satisfaisant aux exigences (A-a) à (A-e) ci-dessous et un copolymère de 4-méthyl-1-pentène (B) satisfaisant aux exigences (B-a) à (B-e) ci-dessous, dans lequel une teneur en (co)polymère (A) est de 60 à 95 parties en masse sur la base d'un total de 100 parties en masse du (co)polymère (A) et du copolymère (B) ; et
    une partie (2) comprenant le (co)polymère de 4-méthyl-1-pentène (A) formé en contact avec la partie (1) :

    (A-a) ayant un pourcentage de teneur d'une unité constitutive (P) dérivée de 4-méthyl-1-pentène de 100 à 90 % en moles, et un pourcentage de teneur d'une unité constitutive (AQ) dérivée d'une α-oléfine ayant de 2 à 20 atomes de carbone (autre que le 4-méthyl-1-pentène) de 0 à 10 % en moles ;
    (A-b) ayant une viscosité intrinsèque [η] mesurée dans la décaline à 135 °C de 1,0 à 4,0 dl/g ;
    (A-c) ayant un point de fusion (Tm) mesuré par DSC dans la plage de 200 à 250 °C ;
    (A-d) ayant une température de cristallisation (Tc) mesurée par DSC dans la plage de 150 à 220 °C ;
    (A-e) ayant une densité de 820 à 850 kg/m$^3$ ;
    (B-a) ayant un pourcentage de teneur de l'unité constitutive (P) dérivée du 4-méthyl-1-pentène de 65 % en moles ou plus et inférieure à 96 % en moles, et un pourcentage de teneur d'une unité constitutive (BQ) dérivée du propylène de plus de 4 % en moles et 35 % en moles ou moins ;
    (B-b) ayant une viscosité intrinsèque [η] mesurée dans la décaline à 135°C de 0,5 à 4,0 dl/g;
    (B-c) ayant une distribution de poids moléculaire (Mw/Mn) représentée par un rapport entre un poids moléculaire moyen en poids (Mw) et un poids moléculaire moyen en nombre (Mn) mesuré par chromatographie par perméation de gel (GPC) de 1,0 à 3,5 ;
    (B-d) n'ayant pas de point de fusion observé (Tm) ou ayant un point de fusion (Tm) dans la plage de 100 à 199 °C, le point de fusion (Tm) étant mesuré par DSC ; et
    (B-e) ayant une densité de 830 à 860 kg/m$^3$.

2.  Produit moulé selon la revendication 1, dans lequel la teneur du (co)polymère (A) dans la composition (X) est de 70 à 90 parties en masse.

3.  Procédé de fabrication du produit moulé selon l'une des revendications 1 ou 2, comprenant :

    une étape (1) de formation préalable de la partie (1) ; et
    une étape (2) de formation de la partie (2) en contact avec la partie (1).

4.  Procédé selon la revendication 3, dans lequel la partie (1) et la partie (2) sont formées par moulage par injection.

[Figure 1]

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010089305 A
- JP 2013169685 A
- WO 2005121192 A
- WO 2011055803 A
- WO 2014050817 A
- WO 2006054613 A